# EUROPÄISCHE PATENTANMELDUNG

(11) **EP 1 582 344 A1**
(43) Veröffentlichungstag der Anmeldung: **05.10.2005**
(21) Anmeldenummer: 05003616.9
(22) Anmeldetag: 19.02.2005
(51) Int. Cl.: B32B 23/04, B32B 21/02

(54) **Halbzeug aus Hanf, Kenaf und Bindemittel für die Automobilindustrie**

(30) Priorität: 31.03.2004 DE 102004016646
(71) Anmelder: BASF Aktiengesellschaft, 67056 Ludwigshafen (DE)
(72) Erfinder: Eichner, Leonhard, 67067 Ludwigshafen (DE); Scheidhauer, Rainer, 67454 Hassloch (DE); Krüsemann, Juliane, 67069 Ludwigshafen (DE); Lahm, Manfred, 55758 Hellertshausen (DE); Dittrich, Rainer, 66869 Kusel (DE); Jungmann, Heribert, 67661 Kaiserlautern (DE)

(57) **Zusammenfassung**

Verfahren zur Herstellung von Halbzeug aus flächenförmigen Fasergebilden und Bindemitteln, wobei man zunächst
(i) ein flächenförmiges Fasergebilde mit einem Bindemittel behandelt, es gegebenenfalls auf einen Feuchtegehalt von 4 bis 30 Gew.-% trocknet,
(ii) die Oberfläche des so behandelten Fasergebildes ein- oder beidseitig mit einem härtbaren Bindemittel beschichtet und
(iii) das beschichtete Fasergebilde auf einen Restfeuchtegehalt von 4 bis 30 Gew.-% zu einem Halbzeug trocknet,
das so erhältliche Halbzeug, Verfahren zur Herstellung von Formkörpern durch Erhitzen des Halbzeugs auf eine Temperatur, die oberhalb der Temperatur liegt, bei der die Bindemittel vernetzen, und Verwendung der Formkörper als Innenteile von Kraftfahrzeugen, als Verpackungsmaterial, als Einweggeschirr, als Zubehör für Bürobedarf, als Tabletts, als Dekorteile in der Möbelindustrie sowie als Einsätze für Schränke, Schubladen und Rückwände von Möbeln.

## Beschreibung

Die Erfindung betrifft ein Verfahren zur Herstellung von Halbzeug und Formteilen aus flächenförmigen Fasergebilden und Bindemitteln, das so erhältliche Halbzeug, daraus hergestellte Formteile und ihre Verwendung.

Die Verfestigung von flächenförmigen Fasergebilden wie Faservliesen aus Glasfasern oder Cellulosefasern, erfolgt bekanntlich mechanisch durch Vernadelung oder Wasserstrahlverfestigung eines naß- bzw. luftgelegten bzw. gekrempelten Vlieses oder durch chemische Verfestigung eines Vlieses mit polymeren Bindemitteln. Um die Naß- und Wärmestandfestigkeit der Vliese zu erhöhen, werden häufig Bindemittel auf Basis von Formaldehydkondensaten eingesetzt, die bei der Verarbeitung und dem Gebrauch der damit verfestigten Vliese Formaldehyd emittieren.

Außerdem sind formaldehydfreie polymere Bindemittel für die Verfestigung von Faservliesen bekannt. So werden beispielsweise in der US-A-4 076 917 Bindemittel beschrieben, die Carbonsäure- oder Anhydridgruppen aufweisende Polymerisate und β-Hydroxyalkylamide als Vernetzer enthalten.

Aus der EP-A-0 445 578 sind Platten aus feinteiligen Materialien wie Glasfasern, bekannt, die mit Hilfe von Bindemittelmischungen aus hochmolekularen Polycarbonsäuren und mehrwertigen Alkoholen, Alkanolaminen oder mehrwertigen Aminen verfestigt sind.

Weitere formaldehydfreie, wässrige Bindemittel zur Herstellung von verfestigten Faservliesen, insbesondere Vliesen aus Glasfasern, sind aus der EP-A-0 583 086 bekannt. Die Bindemittel enthalten eine Polycarbonsäure mit mindestens zwei Carboxyl- oder Anhydridgruppen, mindestens ein Polyol und eine Phosphorverbindung als Reaktionsbeschleuniger. Gemäß der Lehre der EP-A-0 651 088 werden solche Bindemittelmischungen zum Verfestigen von Cellulosesubstraten verwendet.

Aus der WO-A-97/31036 sind formaldehydfreie, wässrige Bindemittel für Faservliese, insbesondere für Vliese aus Glasfasern, bekannt. Die Bindemittel enthalten (A) ein Polymerisat, das zu 5 bis 100 Gew.-% aus einem ethylenisch ungesättigten Säureanhydrid oder einer ethylenisch ungesättigten Dicarbonsäure, deren Carboxylgruppen eine Anhydridgruppe bilden können, besteht und (B) ein Alkanolamin mit mindestens zwei Hydroxylgruppen sowie eine Phosphorverbindung als Reaktionsbeschleuniger.

Aus den gebundenen Faservliesen werden beispielsweise Dachbahnen, Dämmaterialien, Fußbodenbeläge und Topfreiniger hergestellt.

Aus der WO-A-97/31059 sind ebenfalls solche Bindemittel für Fasern, Schnitzel oder Späne zur Herstellung von Formkörpern bekannt. Die Bindemittel haben nach Trocknung (bei 50°C, Dauer 72 Stunden) zu einem Film der Dicke 0,3 bis 1 mm und anschließender 15minütiger Härtung bei 130°C an der Luft einen Gelgehalt von mehr als 50 Gew.-%.

Gemäß der WO-A-97/31060 werden formaldehydfreie wässrige Bindemittel, die (A) ein durch radikalische Polymerisation erhaltenes Polymerisat, das zu 5 bis 100 Gew.-% aus einem ethylenisch ungesättigten Säureanhydrid oder einer ethylenisch ungesättigten Dicarbonsäure, deren Carbonsäuregruppen eine Anhydridgruppe bilden können, besteht und (B) ein Alkanolamin mit mindestens zwei Hydroxylgruppen enthält, als Beschichtungsmittel für Formkörper verwendet. Bei den Formkörpern handelt es sich vorzugsweise um Platten, die z.B. aus organischen oder anorganischen Fasern oder mineralischen Füllstoffen bestehen, die jeweils mit einem Polymerbindemittel verfestigt sind.

Aus der DE-A-199 49 591 ist eine thermisch härtbare Zusammensetzung bekannt, die mindestens ein Carboxylgruppen enthaltendes Copolymerisat, mindestens ein höherfunktionelles β-Hydroxyalkylamin und gegebenenfalls mindestens ein Tensid enthält. Solche Zusammensetzungen werden beispielsweise als Bindemittel für Substrate, insbesondere für Formkörper aus faserigen oder kömigen Materialien verwendet. Zur Herstellung von Formkörpern behandelt man beispielsweise die Substrate mit der genannten Zusammensetzung und härtet sie anschließend durch Erhitzen auf Temperaturen in dem Bereich von 75 bis 250°C.

Aus der WO-A-01/27163 ist eine wässrige Polymerdispersion bekannt, die dispergierte Polymerteilchen mindestens eines Polymerisats A1 enthält, das erhältlich ist durch , radikalische Emulsionspolymerisation in Gegenwart eines Polymerisats A2, das zu 50 bis 99,5 Gew-% aus mindestens einer ethylenisch ungesättigten Mono- und/oder Dicarbonsäure und zu 0,5 bis 50 Gew.-% aus wenigstens einer ethylenisch ungesättigten Verbindung aus der Gruppe der Ester ethylenisch ungesättigter Monocarbonsäuren, der Halbester und der Diester ethylenisch ungesättigter Dicarbonsäuren mit einem mindestens eine Hydroxylgruppe aufweisenden Amin. Die wässrigen Polymerdispersionen werden als thermisch härtbare Bindemittel für Substrate, bevorzugt für Formkörper aus faserigen oder körnigen Materialien verwendet. Mit solchen Polymerdispersionen lassen sich beispielsweise durch Imprägnieren von Papier und anschließende Trocknung Laminate für dekorative Anwendungen herstellen. Diese werden in einem zweiten Schritt auf das zu beschichtende Substrat unter Einwirkung von Druck und Hitze auflaminiert, wobei die Bedingungen so gewählt werden, dass es zur Aushärtung des Bindemittels kommt.

Aus der DE-A-199 17 965 ist eine strahlungshärtbare Verbundschichtplatte oder -folie aus mindestens einer Substratschicht und einer Deckschicht bekannt, die aus einer strahlungshärtbaren Masse besteht, die ein Bindemittel mit einer Glasübergangstemperatur von oberhalb 40°C enthält. Solche Verbunde sind dadurch erhältlich, dass man eine strahlungshärtbare Masse in Form einer Schmelze, Lösung oder Dispersion auf eine Substratschicht aufbringt und diese Schicht anschließend durch Einwirkung von Strahlung härtet. Die Substratschicht dient als Träger und soll eine dauerhaft hohe Zähigkeit des Verbundes gewährleisten. Sie besteht vorzugsweise aus einem thermoplastischen Polymer wie Polymethylmethacrylat, Acrylnitrilbutadienstyrolpolymeren, Acrylstyrolacrylnitrilcopolymeren oder Polycarbonaten und kann auf der Rückseite eine Klebstoffschicht enthalten. Die Verbundfolien werden zur Beschichtung von Kraftfahrzeugteilen eingesetzt, z.B. kommen Kotflügel, Türverkleidungen, Stoßstangen und Spoiler in Betracht.

Bauteile für Automobile werden auch auf Basis von gebundenen und beschichteten Faservliesen hergestellt. So beschichtet man beispielsweise ein Vlies aus einer Abmischung von Naturfasern und synthetischen Fasern ein- oder beidseitig mit Polyurethan-oder Epoxyharzen, verpresst das beschichtete Vlies anschließend in einer Heißpresse zu Autoformteilen wie Autotürverkleidungen, Hutablagen, Instrumententafeln oder Seitenholmen von Türen. Die Formteile werden entweder direkt oder meistens an einem anderen Ort weiterverarbeitet. Die Weiterverarbeitung besteht darin, dass man auf diesen Formteilen mit Hilfe eines Klebstoffs eine Dekorfolie aufbringt.

Aus der DE-A-102 33 521.4 ist eine Mehrschichtlackierung auf einem Substrat wie Papier, Kunststoff oder Metall mit mindestens einem strahlungshärtbaren Lacksystem und mindestens einer zwischen Substrat und dem strahlungshärtbaren Lacksystem angeordneten elastischen Zwischenschicht mit einer Glastemperatur T_{g} von -20°C oder darunter bekannt. Solche Mehrschichtlackierungen werden zur Beschichtung von Gebäuden, Innenbeschichtungen oder für Beschichtungen auf Fahrzeugen oder Flugzeugen verwendet.

Der vorliegenden Erfindung liegt die Aufgabe zugrunde, ein einfacheres und kostengünstigeres Verfahren zur Herstellung von Halbzeug und Formkörpern, insbesondere von Bauteilen für Automobile, zur Verfügung zu stellen.

Die Aufgabe wird erfindungsgemäß gelöst mit einem Verfahren zur Herstellung von Halbzeug aus flächenförmigen Fasergebilden und Bindemitteln, wenn man zunächst
(i) ein flächenförmiges Fasergebilde mit einem Bindemittel behandelt,
(ii) die Oberfläche des so behandelten Fasergebildes ein- oder beidseitig mit einem härtbaren Bindemittel beschichtet und
(iii) das beschichtete Fasergebilde auf einen Restfeuchtegehalt von 4 bis 30 Gew.-% trocknet.

In einer Ausführungsform des erfindungsgemäßen Verfahrens trocknet man das flächenförmige Fasergebilde nach der Behandlung mit einem Bindemittel gemäß Verfahrensschritt (i) auf einen Feuchtegehalt von 4 bis 30, vorzugsweise 8 bis 20 Gew.-% und beschichtet dann die Oberfläche des mit einem Bindemittel behandelten Fasergebildes ein- oder beidseitig mit einem härtbaren Bindemittel gemäß Verfahrensschritt (ii) und trocknet das beschichtete Fasergebilde anschließend im Verfahrensschritt (iii) auf einen Restfeuchtegehalt von 4 bis 30, vorzugsweise 8 bis 20 Gew.-%. Man erhält ein Halbzeug in Form einer flexiblen Matte, die - in Abhängigkeit von der Dicke - aufgerollt werden kann.

Das Trocknen der mit einem Bindemittel gemäß Verfahrensschritt (i) behandelten Fasergebilde sowie das Trocknen der beschichteten Fasergebilde im Verfahrensschritt (iii) wird vorzugsweise bei einer Temperatur durchführt, die unterhalb der Temperatur liegt, bei der die Bindemittel vernetzen. Dadurch wird sichergestellt, dass die Bindmittel noch nicht oder höchstens nur teilweise aushärten und dass man Halbzeuge erhält, die noch flexibel sind. Die Temperatur, bei der die einzelnen Bindemittel vernetzen, hängt von der Art des verwendeten Bindemittels ab. Die Vernetzungstemperatur von Bindemitteln (oder auch als Härtungstemperatur der Bindemittel bezeichnet) wird häufig von den Bindemittelherstellern in technischen Merkblättern angegeben. Sie kann darüber hinaus auf einfache Weise dadurch ermittelt werden, dass man Proben von Bindemitteln auf höhere Temperaturen erhitzt und die Temperatur bestimmt, bei der die Bindemittel in einem bestimmten Lösemittel z.B. Wasser oder Dimethylformamid, nicht mehr löslich sind. Auch die Dauer des Erhitzens beeinflusst den Vernetzungsgrad der Bindemittel. Mit zunehmendem Vernetzungsgrad wird das Bindemittel gehärtet, wodurch die ursprüngliche Flexibilität des Halbzeugs verloren geht. Wenn man als Bindemittel Zweikomponentensysteme wie Epoxidharze verwendet, beginnt die Aushärtung des Bindemittels schon bei Raumtemperatur, Phenolharze vernetzen beispielsweise bei Temperaturen oberhalb von 40°C, während z.B. wässrige Dispersionen auf Basis von Polymerisaten aus Styrol und mindestens einem Acrylat, die mit einer Polycarbonsäure und einem mehrwertigen Alkohol als Vernetzungskomponente modifiziert sind, schon bei einer Temperatur von 130°C vernetzen. Andere Polymerdispersionen, die als Bindemittel verwendet werden, haben höhere Vernetzungstemperaturen, z.B. 150 bis 180°C.

Bei dem Verfahrensschritt (i) handelt es sich um bekannte Maßnahmen zur Herstellung von gebundenen Faservliesen. Hierbei wird mindestens ein Bindemittel in einer Menge von 0,5 bis 40, vorzugsweise 15 bis 30 Gew.-%, bezogen auf den Feststoffgehalt der Bindemittel und flächenförmige Fasergebilde, eingesetzt. Das Bindemittel dient zur Verfestigung der Fasergebilde. Es kann beispielsweise durch Sprühen, Tauchen, Imprägnieren oder Pflatschen oder durch Behandeln des Fasergebildes mit einem Schaum angewendet werden.

Unter Fasergebilden sollen im vorliegenden Zusammenhang textile Flächengebilde wie Gewebe, Gewirke oder Vliese verstanden werden. Sie können aus Fasern, Schnitzeln, Spänen oder deren Mischungen bestehen. Ein Beispiel für solche Gebilde sind naß-oder luftgelegte bzw. gekrempelte Vliese. Die Vliese können beispielsweise aus natürlichen oder synthetischen Fasern oder aus Mischungen von natürlichen und synthetischen Fasern sowie auch aus Spänen oder Schnitzeln aus Holz bestehen. Beispiele für natürliche Fasern sind Fruchtfasern, Samenfasern und Stengelfasern wie Sisal, Jute, Hanf, Kenaf, Flachs, Cellulose und Baumwolle sowie Bananenfasem, Wolle, Haare und Kork. Beispiele für synthetische Fasern sind Fasern aus Polyester, Polyacrylnitril, Polyamid, Kohlenstoff, Polyvinylchlorid, Polyolefinen wie Polyethylen und Polypropylen sowie Aramid und anorganische Fasern wie Mineralfasern und Glasfasern. Vorzugsweise geht man von ungebundenen Vliesen aus nachwachsenden Rohstoffen aus wie Hanf, Kenaf, Sisal, Jute oder Flachs und Mischungen dieser Fasern untereinander z.B. Mischungen aus Hanf und Kenaf oder Mischungen aus Hanf und Flachs bzw. Jute. In einer anderen bevorzugten Ausführungsform der Erfindung verwendet man Mischungen aus natürlichen Fasern und synthetischen Fasern wie Polyesterfasern, Aramidfasern, Kohlenstofffasern oder Polyolefinfasern oder Mischungen aus synthetischen Fasern und Glasfasern z.B. Mischungen aus Polyester- und Glasfasern. Von Interesse sind außerdem Mischungen aus natürlichen Fasern wie Sisal oder Hanf zusammen mit synthetischen Fasern wie Polyesterfasern und/oder Glasfasern. Falls in den flächenförmigen Fasergebilden Naturfasern eingesetzt werden, so beträgt ihr Anteil vorzugsweise mehr als 50 Gew.-%, z.B. 55 bis 75 Gew.-%.

Die flächenförmigen Fasergebilde haben beispielsweise ein Flächengewicht von 80 bis 5000 g/m², vorzugsweise von 500 bis 2000 g/m². Meistens beträgt das Flächengewicht der Fasergebilde 800 bis 1600 g/m².

Thermisch härtbare Bindemittel für die Verfestigung von Faservliesen sind bekannt. Sie werden beispielsweise in den zum Stand der Technik genannten Druckschriften beschrieben, die hiermit durch Bezugnahme zum Offenbarungsgehalt der vorliegenden Erfindung gemacht werden, nämlich US 4 076 917, EP-A-0 445 578, EP-A-0 583 086, EP-A-0 651 088, WO-A-97/31036, Seite 4, Zeile 12 bis Seite 12, Zeile 14, WO-A-97/31059, Seite 2, Zeile 22 bis Seite 12, Zeile 5, WO-A-97/31060, Seite 3, Zeile 8 bis Seite 12, Zeile 36, DE-A-199 49 591, Seite 3, Zeile 5 bis Seite 7, Zeile 38, WO-A-01/27163, Seite 5, Zeile 34 bis Seite 22, Zeile 2 sowie die aus DE-A-199 17 965 bekannten strahlungshärtbaren Bindemittel.

Als thermisch härtbare Bindemittel kommen außer den Bindemitteln, die in den obengenannten Druckschriften beschrieben sind, sämtliche härtbaren Bindemittel in Betracht, die zur Verfestigung von Faservliesen in der Literatur beschrieben sind und/oder die für diesen Zweck in der Praxis verwendet werden wie thermisch härtbare Harze auf Basis von Phenol und Formaldehyd, Melamin-Formaldehyd-Harze, Harnstoff-Formaldehyd-Harze, Ein- und Zweikomponentensysteme auf Basis von Epoxidharzen oder Polyurethanen, Polyacrylate, Polymethacrylate, Polyvinylacetate, Styrol-AcrylatCopolymerisat-Dispersionen, Styrol-Methacrylat-Copolymerisat-Dispersionen, StyrolButadien-(Meth)Acrylsäure-Copolymerisat-Dispersionen sowie Mischungen aus den genannten Dispersionen mit einer Mischung aus einer Polycarbonsäure und einem mehrwertigen Alkohol als Vernetzungskomponente.

Beispiele für bevorzugt in Betracht kommende thermisch härtbare Bindemittel sind Mischungen aus
(a) einem Polymerisat, das durch radikalische Polymerisation erhältlich ist und das zu 5 bis 100 Gew.-% eines ethylenisch ungesättigten Carbonsäureanhydrids oder einer ethylenisch ungesättigten Dicarbonsäure, deren Carbonsäuregruppen eine Anhydridgruppe bilden können, einpolymerisiert enthält und
(b) mindestens einem Alkanolamin, das mindestens zwei Hydroxylgruppen im Molekül enthält.

Spezifische Beispiele für solche Mischungen sind ca. 40 bis 60 Gew.-% Feststoffe enthaltende wässrige Lösungen eines Copolymerisates aus 80 Gew.-% Acrylsäure und 20 Gew.-% Maleinsäure einer Molmasse M_{w} von 15 000 bis 900 000 in Kombination mit Triethanolamin oder wässrige Lösungen eines Copolymerisates aus 55 Gew.-% Acrylsäure und 45 Gew.-% Maleinsäure in Kombination mit Triethanolamin. Diese Bindemittel können gegebenenfalls einen Veresterungskatalysator und/oder eine gebundenen Phosphor enthaltende Verbindung wie hypophosphorige Säure als Reaktionsbeschleuniger.

Das oben beschriebene Copolymerisat (a) kann beispielsweise auch aufgebaut sein aus
- 50 bis 99,5 Gew.-% mindestens einer ethylenisch ungesättigten Mono- oder Dicarbonsäure,
- 0,5 bis 50 Gew.-% wenigstens einer ethylenisch ungesättigten Verbindung aus der Gruppe der Ester von ethylenisch ungesättigten Monocarbonsäuren und den Monoestern und den Diestern ethylenisch ungesättigter Dicarbonsäuren mit einem mindestens eine Hydroxylgruppe aufweisenden Amin und
- bis zu 20 Gew.% eines anderen Monomeren.

Thermisch härtbare, wässrige Zusammensetzungen, die mindestens ein Copolymerisat (a) und mindestens ein Alkanolamin bzw. höherfunktionelles β-Hydroxyalkylamin enthalten, können gegebenenfalls noch zusätzlich mindestens ein Tensid enthalten.

Weitere thermisch härtbare Bindemittel basieren auf wässrigen Mischungen von
- Polycarbonsäuren wie Polyacrylsäure, Polymethacrylsäure, Copolymerisaten aus Acrylsäure und Maleinsäure, Copoylmerisaten aus Methacrylsäure und Maleinsäure, Copolymerisaten aus Ethylen und Maleinsäure, Styrol und Maleinsäure, oder Copolymerisaten aus Acrylsäure oder Methacrylsäure und Estern von Acryl- oder Methacrylsäure mit vorzugsweise einwertigen 1 bis 24 C-Atome enthaltenden Alkoholen, wobei die Polycarbonsäuren einen K-Wert von 50 bis 100 (gemessen in nicht neutralisierter Form der Polycarbonsäuren nach H. Fikentscher in Dimethylformamid bei 25°C und einer Polymerkonzentration von 0,1 Gew.-%)
- mehrwertigen Alkoholen wie Trimethylolpropan, Glycerin, 2-Hydroxymethylbutandiol-1,4 oder Polyvinylalkohol und/oder mehrwertigen Aminen und/oder Alkanolaminen.

Polycarbonsäuren, mehrwertige Alkohole, Alkanolamine und mehrwertige Amine werden bevorzugt in solchen Mengen eingesetzt, dass die Anzahl der Säurefunktion der Gesamtzahl aus alkoholischen Hydroxyl- und Aminfunktionen äquivalent ist, vgl. EP-A-0 445 578. Außerdem eignen sich Binder, die aus einer wässrigen Lösung einer Polycarbonsäure (Homo- oder Copolymerisat) vorzugsweise mit einer Molmasse M_{w} von 10000 oder darunter und einem Polyol wie Triethanolamin bestehen und bei denen das Verhältnis der Äquivalente von Hydroxylgruppen zu Äquivalenten von Carboxylgruppen in dem Bereich von 0,4 : 1 bis 1,0 : 1 beträgt, vgl. EP-A-0 990 727.

Bei dem erfindungsgemäßen Verfahren werden in den Stufen (i) und (ii) mit besonderem Vorteil Bindemittel eingesetzt, die unter dem Warenzeichen Acrodur® von BASF Aktiengesellschaft vertrieben werden. Ein Beispiel hierfür ist eine wässrige Styrol-Acrylat-Polymerdispersion, die mit einer Polycarbonsäure und einem mehrwertigen Alkohol als Vernetzungskomponente modifiziert ist. Es vernetzt bereits bei einer Temperatur von 130°C. Um jedoch hohe Produktionsgeschwindigkeiten zu erzielen, führt man die Vernetzung bevorzugt bei Temperaturen von 180 bis 200°C durch. Ein weiteres formaldehydfreies Bindemittel für Holzfasern, Naturfasern und Kork, das sich auch zur Verfestigung von Glas- und Mineralfasern eignet, ist als farblose bis leicht gelbliche, klare, wässrige Lösung einer modifizierten Polycarbonsäure mit einem mehrwertigen Alkohol als Vernetzungskomponente im Handel erhältlich. Es vernetzt bei Trocknungstemperaturen von ca. 160 bis 180°C. Um eine hohen Vernetzungsgrad zu erzielen, wird empfohlen, die Produktionsgeschwindigkeit in Abhängigkeit von Vernetzungszeit und Vernetzungstemperatur zu optimieren.

Als Bindemittel setzt man vorzugsweise formaldehydarme oder formaldehydfreie thermisch härtbare Produkte ein. Unter formaldehydarm soll im vorliegenden Zusammenhang verstanden werden, dass die Bindemittel keine wesentlichen Mengen an freiem Formaldehyd enthalten und dass auch beim Trocknen bzw. Härten der mit den Bindemitteln behandelten Materialien keine wesentlichen Mengen an Formaldehyd freigesetzt werden. Im Allgemeinen enthalten solche Bindemittel < 100 ppm Formaldehyd.

Besonders bevorzugt sind formaldehydfreie Bindemittel, die mindestens eine Polycarbonsäure und mindestens einen mehrwertigen Alkohol und/oder Alkanolamin oder mehrwertiges Amin enthalten. Zusammensetzungen, die diese Bindemittel enthalten, können gegebenenfalls noch weitere formaldehydfreie Bindemittel enthalten, z.B. Polyacrylate, die unter dem Warenzeichen Acronal® von BASF Aktiengesellschaft vertrieben werden.

Sämtliche härtbaren Bindemittel, die für das Binden von Faservliesen bekannt sind und auf die oben hingewiesen wird, können in den Verfahrensstufen (i) und (ii) als Bindemittel eingesetzt werden. So kann man beispielsweise in der Verfahrensstufe (i) ein Polyacrylat und in der Verfahrensstufe (ii) eine Mischung aus einer Polycarbonsäure und einem mehrwertigen Alkohol einsetzen. Vorzugsweise verwendet man in den Verfahrensstufen (i) und (ii) Bindemittel des Typs Acrodur® auf Basis mindestens einer Polycarbonsäure und mindestens eines mehrwertigen Alkohols. Außerdem können auch Mischungen aus mindestens einem härtbaren Bindemittel und wenigsten einem anderen Bindemittel verwendet werden.

In der Verfahrensstufe (ii) wird das mit einem Bindemittel behandelte flächenförmige Fasergebilde, gegebenenfalls nach einem Trocken auf einen Feuchtegehalt von 4 bis 30 Gew.-%, mit einem Bindemittel beschichtet. Im Gegensatz zur Verfestigung von Faservliesen - und mithin auch im Gegensatz zum Verfahrensschritt (i) - soll das Bindemittel, das im Verfahrensschritt (ii) angewendet wird, im Wesentlichen an der Oberfläche des faserförmigen Flächengebildes verbleiben oder nur zu einem geringen Teil darin eindringen. Diese Beschichtung wird vorzugsweise dadurch erreicht, dass man im Verfahrensschritt (ii) ein schaumförmiges, härtbares Bindemittel oder ein pastenförmiges, härtbares Bindemittel einsetzt.

Schaumförmige, härtbare Bindemittel sind dadurch zugänglich, dass man beispielsweise eine wässrige, härtbare Bindemittel enthaltende Lösung, die vorzugsweise ein Tensid enthält, nach der Schlagschaummethode schäumt. Man kann jedoch auch ein inertes Gas z.B. Stickstoff oder Kohlendioxid, in einer solchen Lösung unter Druck lösen und das Gemisch anschließend durch eine Düse unter Schäumen entspannen. Die im erfindungsgemäßen Verfahren angewendeten schaumförmigen, härtbaren Bindemittel haben beispielsweise Schaumgewichte von 150 bis 500, vorzugsweise 250 bis 450 g/l. Meistens liegen die Schaumgewichte der härtbaren Bindmittelzubereitungen in dem Bereich von 300 bis 400 g/l.

Wenn man die Beschichtung des faserförmigen Flächengebildes im Verfahrensschritt (ii) mit einem pastenförmigen, härtbaren Bindemittel durchführt, so stellt man die Viskosität der Bindemittelzubereitung z.B. durch Zusatz mindestens eines Verdickungsmittels, auf einen Wert von 500 bis 5000 mPas, vorzugsweise auf 1000 bis 4000 mPas ein. Meistens liegen die Viskositäten des härtbaren Bindemittels, das für die Oberflächenbeschichtung eingesetzt wird, bei 1500 bis 3000 mPas.

Die im Verfahrensschritt (ii) eingesetzte Menge an härtbaren Bindemitteln beträgt beispielsweise 0,5 bis 30, vorzugsweise 1 bis 20 Gew.-%, bezogen auf den Feststoffgehalt des in der Verfahrensstufe (i) erhaltenen Produkts. Meistens liegen die für die Beschichtung im Verfahrensschritt (ii) verwendeten Mengen an härtbarem Bindemittel in dem Bereich von 2 bis 10 Gew.-%, bezogen auf den Feststoffgehalt des in der Verfahrensstufe (i) erhaltenen Produkts.

Die Bindemittel können gegebenenfalls Zusatzstoffe enthalten, z.B. Hydrophobierungsmittel wie Silixane, Entschäumer, Füllstoffe wie Perlite, Brandschutzmittel wie Aluminiumsilikate, Aluminiumhydroxide, Borate und/oder Phosphate, Stärke oder Farbmittel.

Die härtbaren Bindemittel, die in der Verfahrensstufe (ii) zum Beschichten eingesetzt werden, enthalten vorzugsweise ein Farbmittel. Geeignete Farbmittel sind beispielsweise die unten genannten Pigmentpräparationen, insbesondere wäßrige Pigmentpräparationen. Die Farbmittel werden beispielsweise in einer Menge von 0,1 bis 50, vorzugsweise 0,5 bis 10 Gew.-%, bezogen auf das Bindemittel, verwendet. Die Farbmittel können dem Bindemittel vor dem Schäumen zugesetzt werden oder auch in das geschäumte Bindemittel eingearbeitet werden. Wenn man zum Beschichten eine Paste verwendet, so setzt man das Farbmittel vorteilhafterweise dem noch nicht verdickten Bindemittel zu und gibt erst nach dem Homogenisieren der Masse ein Verdickungsmittel zu. Es ist auch möglich, das in der Verfahrensstufe (i) eingesetzte Bindemittel mit einem Farbmittel einzufärben.

Beispiele für geeignete Farbmittel sind wäßrige Pigmentpräparationen, die z.B. bevorzugt in feinteiliger Form vorliegen. Diese Präparationen enthalten Pigmente, die im folgenden Text mit "(A)" bezeichnet sind. Die Pigmente haben üblicherweise mittlere Teilchengrößen von 0,1 bis 5 µm, insbesondere 0,1 bis 3 µm und vor allem 0,1 bis 1 µm.

Bei den organischen Pigmenten handelt es sich üblicherweise um organische Bunt-und Schwarzpigmente. Anorganische Pigmente können ebenfalls Farbpigmente (Bunt-, Schwarz- und Weißpigmente) sowie Glanzpigmente sein.

Im folgenden seien als Beispiele für geeignete organische Farbpigmente genannt:
- Monoazopigmente:
   C.I. Pigment Brown 25;
   C.I. Pigment Orange 5, 13, 36, 38, 64 und 67;
   C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251;
   C.I. Pigment Yellow 1, 3, 62, 65, 73, 74, 97, 120, 151, 154, 168, 181, 183 und 191;
   C.I. Pigment Violet 32;
- Disazopigmente:
   C.I. Pigment Orange 16, 34, 44 und 72;
   C.I. Pigment Yellow 12, 13, 14, 16, 17, 81, 83, 106, 113, 126, 127, 155, 174, 176, 180 und 188;
- Disazokondensationspigmente:
   C.I. Pigment Yellow 93, 95 und 128;
   C.I. Pigment Red 144, 166, 214, 220, 221, 242 und 262;
   C.I. Pigment Brown 23 und 41;
- Anthanthronpigmente: C.I. Pigment Red 168;
- Anthrachinonpigmente: C.I. Pigment Yellow 147, 177 und 199; C.I. Pigment Violet 31;
- Anthrapyrimidinpigmente: C.I. Pigment Yellow 108;
- Chinacridonpigmente:
   C.I. Pigment Orange 48 und 49;
   C.I. Pigment Red 122, 202, 206 und 209; C.I. Pigment Violet 19;
- Chinophthalonpigmente: C.I. Pigment Yellow 138;
- Diketopyrrolopyrrolpimgente: C.I. Pigment Orange 71, 73 und 81; C.I. Pigment Red 254, 255, 264, 270 und 272;
- Dioxazinpigmente: C.I. Pigment Violet 23 und 37; C.I. Pigment Blue 80;
- Flavanthronpigmente: C.I. Pigment Yellow 24;
- Indanthronpigmente: C.I. Pigment Blue 60 und 64;
- Isoindolinpigmente: C.I. Pigmente Orange 61 und 69; C.I. Pigment Red 260;
   C.I. Pigment Yellow 139 und 185;
- Isoindolinonpigmente: C.I. Pigment Yellow 109, 110 und 173;
- Isoviolanthronpigmente: C.I. Pigment Violet 31;
- Metallkomplexpigmente: C.I. Pigment Red 257; C.I. Pigment Yellow 117, 129, 150, 153 und 177; C.I. Pigment Green 8;
- Perinonpigmente: C.I. Pigment Orange 43; C.I. Pigment Red 194;
- Perylenpigmente: C.I. Pigment Black 31 und 32; C.I. Pigment Red 123, 149, 178, 179, 190 und 224; C.I. Pigment Violet 29;
- Phthalocyaninpigmente: C.I. Pigment Blue 15, 15:1, 15:2, 15:3, 15:4, 15:6 und 16;
   C.I. Pigment Green 7 und 36;
- Pyranthronpigmente: C.I. Pigment Orange 51; C.I. Pigment Red 216;
- Pyrazolochinazolonpigmente: C.I. Pigment Orange 67; C.I. Pigment Red 251;
- Thioindigopigmente: C.I. Pigment Red 88 und 181; C.I. Pigment Violet 38;
- Triarylcarboniumpigmente: C.I. Pigment Blue 1, 61 und 62; C.I. Pigment Green 1;
   C.I. Pigment Red 81, 81:1 und 169;
   C.I. Pigment Violet 1, 2, 3 und 27;
- C.I. Pigment Black 1 (Anilinschwarz);
- C.I. Pigment Yellow 101 (Aldazingelb);
- C.I. Pigment Brown 22.

Geeignete anorganische Farbpigmente sind z.B.:
- Weißpigmente: Titandioxid (C.I. Pigment White 6), Zinkweiß, Farbenzinkoxid; Zinksulfid, Lithopone;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün;
Kobaltblau (C.I. Pigment Blue 28 und 36; C.I. Pigment Blue 72); Ultramarinblau; Manganblau;
Ultramarinviolett; Kobalt- und Manganviolett;
Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot;
Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange;
Cersulfid (C.I. Pigment Orange 75);
Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pigment Yellow 184).

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminium-plättchen und ein- oder mehrfach, insbesondere mit Metalloxiden beschichtete Aluminium-, Eisenoxid- und Glimmerplättchen genannt.

Die Pigmente (A) werden in der Regel in Form von lösemittelhaltigen, insbesondere wäßrigen Farbmittelzubereitungen eingesetzt, die beispielsweise 10 bis 70 Gew.-%, vorzugsweise 10 bis 60 Gew.-% mindestens eines Pigments enthalten.

Zum Färben der Bindemittel sind außerdem solche Farbmittelzubereitungen geeignet, die mindestens einen Farbstoff (B) enthalten. Geeignet sind dabei insbesondere Farbstoffe, die in Wasser oder einem mit Wasser mischbaren oder in Wasser löslichen organischen Lösemittel löslich sind. Wenn man zum Färben der Bindemittel Mischungen aus einem Pigment (A) und einem Farbstoff (B) einsetzt, so weisen die eingesetzten Farbstoffe (B) vorzugsweise einen den Pigmenten (A) jeweils vergleichbaren Farbton auf, weil auf diese Weise eine besonders intensive Färbung der Bindemittel bzw. der Formkörper erzielbar ist. Es können jedoch auch im Farbton abweichende Farbstoffe (B) eingesetzt werden, wodurch Nuancierungen der Färbung möglich sind.

Geeignet sind insbesondere kationische und anionische Farbstoffe, wobei kationische Farbstoffe bevorzugt sind. Geeignete kationische Farbstoffe (B) entstammen insbesondere der Di- und Triarylmethan-, Xanthen-, Azo-, Cyanin-, Azacyanin-, Methin-, Acridin-, Safranin-, Oxazin-, Indulin-, Nigrosin- und Phenazin-Reihe, wobei Farbstoffe aus der Azo-, Triarylmethan- und Xanthenreihe bevorzugt sind.

Als Farbstoffe (B) seien im einzelnen beispielhaft aufgeführt: C.I. Basic Yellow 1, 2 und 37; C.I. Basic Orange 2; C.I. Basic Red 1 und 108; C.I. Basic Blue 1, 7 und 26; C.I. Basic Violet 1, 3, 4, 10, 11 und 49; C.I. Basic Green 1 und 4; C.I. Basic Brown 1 und 4.

Kationische Farbstoffe (B) können auch externe basische Gruppen enthaltende Farbmittel sein. Geeignete Beispiele sind hier C.I. Basic Blue 15 und 161.

Als kationische Farbstoffe (B) können auch die korrespondierenden Farbbasen in Gegenwart von löslich machenden sauren Agenzien eingesetzt werden. Als Beispiele seien genannt: C.I. Solvent Yellow 34; C.I. Solvent Orange 3; C.I. Solvent Red 49; C.I. Solvent Violet 8 und 9; C.I. Solvent Blue 2 und 4; C.I. Solvent Black 7.

Geeignete anionische Farbstoffe sind insbesondere sulfonsäuregruppenhaltige Verbindungen aus der Reihe der Azo-, Anthrachinon-, Metallkopmplex-, Triarylmethan-, Xanthen- und Stilbenreihe, wobei Farbstoffe aus der Triarylmethan-, Azo- und Metallkomplex- (vor allem Kupfer-, Chrom- und Kobaltkomplex-) Reihe bevorzugt sind.

Im einzelnen genannt seien beispielsweise: C.I. Acid Yellow 3, 19, 36 und 204; C.I. Acid Orange 7, 8 und 142; C.I. Acid Red 52, 88, 351 und 357; C.I. Acid Violet 17 und 90; C.I. Acid Blue 9, 193 und 199; C.I. Acid Black 194; anionische Chromkomplexfarbstoffe wie C.I. Acid Violet 46, 56, 58 und 65; C.I. Acid Yellow 59; C.I. Acid Orange 44, 74 und 92; C.I. Acid Red 195; C.I. Acid Brown 355 und C.I. Acid Black 52; anionische Kobaltkomplexfarbstoffe wie C.I. Acid Yellow 119 und 204; C.I. Direct Red 80 und 81.

Vorzugsweise setzt man wasserlösliche Farbstoffe ein. Als Wasserlöslichkeit vermittelnde Kationen sind dabei insbesondere Alkalimetallkationen, wie Li⁺, Na⁺, K⁺, Ammonium- und substituierte Ammoniumionen, insbesondere Alkanolammoniumionen, zu nennen.

Die Farbmittelzubereitungen enthalten entweder mindestens ein Pigment (A) oder mindestens einen Farbstoff (B). Der Farbstoff (B) ist beispielsweise in einer Menge von 0,1 bis 10 Gew.-% in einer lösemittelhaltigen Zubereitung anwesend. In manchen Fällen ist es vorteilhaft, Mischungen aus einem Pigment (A) und einem Farbstoff (B) zum Färben der Bindemittel bzw. Formkörper einzusetzen. Solche Mischungen von Farbmittelzubereitungen enthalten den Farbstoff (B) dann im allgemeinen in Mengen von 0,5 bis 10 Gew.-%, vorzugsweise 1 bis 8 Gew.-%, jeweils bezogen auf das Pigment (A). Bezogen auf das Gesamtgewicht der Zubereitung, entspricht dies Mengen von in der Regel 0,05 bis 7 Gew.-%, vor allem 0,1 bis 5,6 Gew.-%.

Beispiele für bevorzugte Pigment/Farbstoff-Kombinationen sind: C.I. Pigment Pigment Blue 15:1 und C.I. Basic Violet 4; C.I. Pigment Green 7 und C.I. Basic Green 4; C.I. Pigment Red 48:2 und C.I. Direct Red 80; C.I. Pigment Black 7 und C.I. Basic Violet 3.

Die Farbmittelzubereitungen können außer (A) und/oder (B) noch mindestens ein Dispergiermittel enthalten, z.B. nichtionische und/oder anionische oberflächenaktive Additive sowie auch Mischungen dieser Additive. Bevorzugte nichtionische oberflächenaktive Additive basieren insbesondere auf Polyethern. Neben den ungemischten Polyalkylenoxiden, bevorzugt C₂-C₄-Alkylenoxiden und phenylsubsitutierten C₂-C₄-Alkylenoxiden, insbesondere Polyethylenoxiden, Polypropylenoxiden und Poly(phenylethylenoxiden), sind vor allem Blockcopolymere, insbesondere Polypropylenoxid- und Polyethylenoxidblöcke oder Poly(phenylethylenoxid)- und Polyethylenoxidblöcke aufweisende Polymere, und auch statistische Copolymere dieser Alkylenoxide als Dispergiermittel geeignet.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymere an Ethylenoxid liegt üblicherweise bei 10 bis 90 Gew.-%. Die Blockcopolymere auf Basis mehrwertiger Alkohole weisen im allgemeinen mittlere Molekulargewichte Mₙ von 1000 bis 20 000, vorzugsweise 1000 bis 15 000, auf. Derartige Alkylenoxidblockcopolymere sind bekannt und im Handel z.B. unter den Namen Tetronic® und Pluronic® (BASF Aktiengesellschaft) erhältlich.

Anionische oberflächenaktive Dispergiermittel basieren insbesondere auf Sulfonaten, Sulfaten, Phosphonaten oder Phosphaten sowie carboxylatgruppenhaltigen oberflächenaktiven Polymeren.

Beispiele für geeignete Sulfonate sind aromatische Sulfonate, wie p-C₈-C₂₀-Alkylbenzolsulfonate, Di-(C₁-C₈-alkyl)naphthalinsulfonate und Kondensationsprodukte von Naphthalinsulfonsäuren mit Formaldehyd, und aliphatische Sulfonate, wie C₁₂-C₁₈-Alkansulfonate, α-Sulfofettsäure-C₂-C₈-alkylester, Sulfobernsteinsäureester und Alkoxy-, Acyloxy- und Acylaminoalkansulfonate. Bevorzugt sind Arylsulfonate, wobei die Di-(C₁-C₈-alkyl)naphthalinsulfonate besonders bevorzugt sind. Ganz besonders bevorzugt sind Diisobutyl- und Düsopropylnaphthalinsulfonat. Beispiele für geeignete Sulfate sind C₈-C₂₀-Alkylsulfate.

Eine weitere wichtige Gruppe anionischer oberflächenaktiver Additive, die als Dispergiermittel für Farbstoffe und Pigmente in Betracht kommen, sind Sulfonate, Sulfate, Phosphonate und Phosphate der als nichtionische Additive genannten Polyether.

Diese können durch Umsetzung mit Phosphorsäure, Phosphorpentoxid und Phosphonsäure bzw. Schwefelsäure und Sulfonsäure in die Phosphorsäuremono- oder -diester und Phosphonsäureester bzw. die Schwefelsäuremonoester und Sulfonsäureester überführt werden. Diese sauren Ester liegen, wie die weiter oben aufgeführten Sulfonate und Sulfate, bevorzugt in Form wasserlöslicher Salze, insbesondere als Alkalimetallsalze, vor allem Natriumsalze, und Ammoniumsalze vor, sie können jedoch kalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbesondere ethoxylierten, Fett- und Oxoalkoholen, Alkylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen, wie Hexamethylendiamin. Derartige anionische oberflächenaktive Additive sind bekannt und im Handel z.B. unter den Namen Nekal® (BASF), Tamol® (BASF), Crodafos® (Croda), Rhodafac® (Rhodia), Maphos® (BASF), Texapon® (Cognis), Empicol® (Albright & Wilson), Matexil® (ICI), Soprophor® (Rhodia) und Lutensit® (BASF) erhältlich.

Weitere geeignete anionische oberflächenaktive Additive, die als Dispergiermittel für Pigmente und Farbstoffe in Betracht kommen, basieren auf wasserlöslichen carboxylatgruppenhaltigen Polymeren. Diese können durch Einstellung des Verhältnisses zwischen enthaltenen polaren und unpolaren Gruppierungen vorteilhaft an den jeweiligen Anwendungszweck und das jeweilige Pigment angepaßt werden können. Anionische oberflächenaktive Additive sind ebenfalls bekannt und im Handel z.B. unter den Namen Sokalan® (BASF), Joncryl® (Johnson Polymer), Neoresin® (Avecia) sowie Orotan® und Morez® (Rohm & Haas) erhältlich.

Die Farbmittelzubereitungen weisen üblicherweise einen Gehalt an mindestens einem Dispergiermittel von 1 bis 50 Gew.-%, insbesondere von 1 bis 40 Gew.-%, auf.

Nach der Beschichtung wird das mit mindestens einem Bindemittel beschichtete flächenförmige Fasergebilde, das gegebenenfalls eingefärbt ist, im Verfahrensschritt (iii) auf einen Restfeuchtegehalt von 4 bis 30, vorzugsweise 10 bis 20 Gew.-% getrocknet. Dieser Trocknungsschritt wird vorzugsweise bei einer Temperatur durchgeführt, bei der die Bindemittel noch nicht gehärtet werden, d.h. die Temperatur liegt unterhalb der Vernetzungstemperatur der Bindemittel. Man erhält ein Halbzeug, das fexibel ist. Sofern beim Beschichten in der Verfahrensstufe (ii) ein eingefärbtes Bindemittel eingesetzt wurde, sind die einzelnen Fasern der Warenbahn nicht oder kaum mehr zu erkennen. Die Breite des Halbzeugs kann - in Abhängigkeit von den in der Technik verfügbaren Anlagen - beispielsweise bis zu 12 m betragen, während die Dicke des Halbzeugs in dem Bereich von 1 bis 50, vorzugsweise 3 bis 10 mm betragen kann. Das Halbzeug kann beispielsweise in einzelne Matten geschnitten oder in Form von Rollen gelagert werden.

Das Halbzeug kann in dem Betrieb, in dem es hergestellt wurde, oder auch nach einem Transport zu einem Hersteller von Fertigteilen, an einem anderen Standort zu den erfindungsgemäßen Formkörpern verarbeitet werden. Das Halbzeug wird zu diesem Zweck - in aller Regel nach einer vorhergehenden Formgebung z.B. in einer Presse unter Verformen - auf eine Temperatur erhitzt, die oberhalb der Temperatur liegt, bei der die Bindemittel vernetzen. In Abhängigkeit von der Art des Bindemittels und der Dauer des Erhitzens benötigt man für die Herstellung der Formkörper unterschiedliche Temperaturen. Das Halbzeug wird vorzugsweise zur Formgebung und Härtung der Bindemittel in einer Presse auf eine Temperatur in dem Bereich von 100 bis 260°C, vorzugsweise 180 bis 220°C, erhitzt.

Falls in der Verfahrensstufe (ii) ein strahlungshärtbares Bindemittel verwendet wurde, kann die Härtung des Bindemittels gegebenenfalls zusätzlich auch durch Einwirkung von energiereicher Strahlung erfolgen, wobei hier elektromagnetische Strahlung im Wellenlängenbereich von 760 nm bis 2,5 µm zur Anwendung gelangt. Als Strahlungsquellen für die Strahlungshärtung eignen sich beispielsweise Quecksilber-Niederdruckstrahler, - Mitteldruckstrahler sowie Leuchtstoffröhren, Impulsstrahler, Metallhalogenidstrahler oder Eximerstrahler.

Man erhält dann ausgehärtete, starre Formkörper, die duroplastische Eigenschaften haben und eine kratzfeste Oberfläche aufweisen. Der Vernetzungsgrad der Bindemittel beträgt meistens >50, bevorzugt >90 Gew.-%. Die Formkörper nehmen in Abhängigkeit von den eingesetzten Fasern und den Klimabedingungen unterschiedliche Mengen an Feuchtigkeit auf. Sie haben eine optimale Naß- und Wärmestandfestigkeit. Sie haben beispielsweise eine Dichte von 0,4 bis 1,8 g/cm³, vorzugsweise von 0,45 bis 1,1 g/cm³. Die nach dem erfindungsgemäßen Verfahren erhaltenen Formkörper haben eine dekorative Oberfläche, so dass sie direkt als Bauteile eingesetzt werden können. So erübrigt sich beispielsweise eine weitere Beschichtung oder Laminierung, wie sie bisher üblich war.

Formteile, die nach dem erfindungsgemäßen Verfahren erhältlich sind, werden beispielsweise als Innenteile von Kraftfahrzeugen wie Türinnenverkleidungen, Armaturentafeln, Seitenholme und Hutablagen, als Brillenetui, Verpackungsmaterial wie Kisten und Schachteln, im Dekobereich, als Einweggeschirr, Zubehör für Bürobedarf, als Tabletts, als Dekorteile in der Möbelindustrie, sowie für Einsätze von Schränken, Schubladen und Rückwände von Möbeln verwendet. Sie können beispielsweise auch als Innenteile von Schubladen oder für die Trittschalldämmung verwendet werden.

Die Prozentangaben in den Beispielen bedeuten Gewichtsprozent.

### Beispiele

### Beispiel 1

Das Verfahren ist geeignet einen kostengünstigen Werkstoff aus überwiegend nachwachsenden Rohstoffen herzustellen, der selbst den hohen Anforderungen der Automobilindustrie genügt.

Neben Produkten für die Automobilindustrie sind auch viele weitere Einsatzgebiete, in denen heute noch reine Kunststoffe zur Anwendung kommen, mit diesem Verfahren zu erschließen.

### Herstellung eines Halbzeugs

Man stellte zunächst ein Krempelvlies aus Hanf und Kenaf im Gewichtsverhältnis 1 : 1 mit einem Flächengewicht von 1080 g/m² her. Das Vlies wurde anschließend mit 30%, bezogen auf die Vliesmasse, mit einer Mischung aus Acrodur® 950L (Bindemittel auf Basis einer farblosen bis leicht gelblichen, klaren, 50%igen wässrigen Lösung einer modifizierten Polycarbonsäure mit einem mehrwertigen Alkohol als Vernetzungskomponente) und Acronal® 32D (wässrige Dispersion eines Copolymerisates auf Basis von Polyacrylat) im Gewichtsverhältnis 3:1 imprägniert. Nach Durchlaufen einer Zwickelpassage wurde auf das imprägnierte Vlies mit einem Rakel eine Schicht eines schaumförmigen, mit 2 % C.I. Pigment Blue 15, 15:1 (Disperse Blue 69-1117 von BASF) blau eingefärbten Acrodur® 950 L aufgebracht. Der Schaum hatte eine Dichte von 200g/l, die auf das Vlies aufgebrachte Schaummenge betrug mit 150g/m², jeweils bezogen auf die Trockenmasse. Der Gesamtverbund wurde anschließend bei 120°C und einer Verweildauer von 2,5 min auf eine Restfeuchte von 18% getrocknet. Die Warenbahn wurde zu Matten in den Maßen 1000x770mm geschnitten.

Um die Tauglichkeit dieser Matten als Halbzeug zu prüfen, wurden sie luftdicht verpackt und 3 Wochen bei Raumtemperatur gelagert. Sie hatten danach noch immer eine ausreichende Flexibilität. Es wurden keine Anzeichen von Schimmelbildung gefunden.

### Herstellung eines Formkörpers

Das oben beschriebene Halbzeug wurde in einem Werkzeug für Türverkleidungen unter folgenden Bedingungen verpresst:
- Oberflächentemperatur des Werkzeugs 200°C
- Pressdruck 200t (20 kg/cm²)
- Mindestabstand zwischen Unter- und Oberform 1,85 mm
- Presszyklus 1: 8 sec. Werkzeugabstand 6mm 5 sec. öffnen
- Presszyklus 2: 10 sec. Werkzeugabstand 6mm 5 sec. öffnen
- Presszyklus 3: 30 sec. Werkzeugabstand 1,85 mm.

Entnahme des Bauteils nach dem dritten Presszyklus.

Beim ersten Presszyklus entwich eine große Menge Wasserdampf mit lauten Zischen. Die Menge an Wasserdampf hatte sich beim zweiten Presszyklus etwa halbiert. Nach dem dritten Presszyklus konnte das Bauteil problemlos aus der Presse genommen werden. Es haftete nicht am Werkzeug.

Der Formkörper hatte schon bei der Entnahme aus dem Werkzeug nahezu seine endgültige Steifigkeit. Die Dickenmessung ergab direkt nach dem Verpressen einen Wert von 1,85 mm und nach Klimatisierung einen Wert von 1,86 mm, d.h. die Dimensionsänderung betrug 0,5%.

Die Oberfläche des Formkörpers war geschlossen, Faserstrukturen konnten nicht mehr festgestellt werden. Die Oberflächenhärte machte subjektiv einen guten Eindruck, durch Kratzen mit den Fingernägeln konnte die Oberfläche nicht beschädigt werden.

## Patentansprüche

1. Verfahren zur Herstellung von Halbzeug aus flächenförmigen Fasergebilden und Bindemitteln, **dadurch gekennzeichnet, dass** man zunächst
(i) ein flächenförmiges Fasergebilde mit einem Bindemittel behandelt,
(ii) die Oberfläche des so behandelten Fasergebildes ein- oder beidseitig mit einem härtbaren Bindemittel beschichtet und
(iii) das beschichtete Fasergebilde auf einen Restfeuchtegehalt von 4 bis 30 Gew.-% trocknet.

2. Verfahren nach Anspruch 1, **dadurch gekennzeichnet, dass** man das flächenförmige Fasergebilde nach der Behandlung mit einem Bindemittel gemäß Verfahrensschritt (i) auf einen Feuchtegehalt von 4 bis 30 Gew.% trocknet.

3. Verfahren nach Anspruch 1 oder 2, **dadurch gekennzeichnet, dass** man das Trocknen der mit einem Bindemittel behandelten Fasergebilde bei einer Temperatur durchführt, die unterhalb der Temperatur liegt, bei der die Bindemittel vernetzen.

4. Verfahren nach einem der Ansprüche 1 bis 3, **dadurch gekennzeichnet, dass** man das Bindemittel im Verfahrensschritt (i) in einer Menge von 0,5 bis 40 Gew.-%, bezogen auf den Feststoffgehalt der Bindemittel und flächenförmige Fasergebilde, einsetzt.

5. Verfahren nach einem der Ansprüche 1 bis 4, **dadurch gekennzeichnet, dass** man das Bindemittel im Verfahrensschritt (i) in einer Menge von 15 bis 30 Gew.-%, bezogen auf den Feststoffgehalt der Bindemittel und flächenförmige Fasergebilde, einsetzt.

6. Verfahren nach einem der Ansprüche 1 bis 5, **dadurch gekennzeichnet, dass** man als Bindemittel formaldehydfreie thermisch härtbare Bindemittel einsetzt.

7. Verfahren nach einem der Ansprüche 1 bis 6, **dadurch gekennzeichnet, dass** das flächenförmige Fasergebilde ein Gewebe, Gewirke oder Vlies ist.

8. Verfahren nach Anspruch 7, **dadurch gekennzeichnet, dass** das Fasergebilde aus natürlichen oder synthetischen Fasern oder deren Mischungen aufgebaut ist.

9. Verfahren nach einem der Ansprüche 1 bis 8, **dadurch gekennzeichnet, dass** man das mit einem Bindemittel behandelte flächenförmige Fasergebilde im Verfahrensschritt (ii) mit einem schaumförmigen, härtbaren Bindemittel beschichtet.

10. Verfahren nach einem der Ansprüche 1 bis 9, **dadurch gekennzeichnet, dass** man das mit einem Bindemittel behandelte flächenförmige Fasergebilde im Verfahrensschritt (ii) mit einem pastenförmigen, härtbaren Bindemittel beschichtet.

11. Verfahren nach einem der Ansprüche 1 bis 10, **dadurch gekennzeichnet, dass** die im Verfahrensschritt (ii) eingesetzte Menge an härtbaren Bindemitteln 0,5 bis 30 Gew.-%, bezogen auf den Feststoffgehalt des in der Verfahrensstufe (i) erhaltenen Produkts, beträgt.

12. Verfahren nach einem der Ansprüche 1 bis 11, **dadurch gekennzeichnet, dass** die im Verfahrensschritt (ii) eingesetzte Menge an härtbaren Bindemitteln 1 bis 20 Gew.%, bezogen auf den Feststoffgehalt des in der Verfahrensstufe (i) erhaltenen Produkts, beträgt.

13. Verfahren nach einem der Ansprüche 1 bis 12, **dadurch gekennzeichnet, dass** die im Verfahrensschritt (ii) eingesetzte Menge an härtbaren Bindemitteln 2 bis 10 Gew.%, bezogen auf den Feststoffgehalt des in der Verfahrensstufe (i) erhaltenen Produkts, beträgt.

14. Verfahren nach einem der Ansprüche 1 bis 13, **dadurch gekennzeichnet, dass** das im Verfahrensschritt (ii) eingesetzte Bindemittel eingefärbt ist.

15. Halbzeug, erhältlich nach dem Verfahren gemäß einem der Ansprüche 1 bis 14.

16. Verfahren zur Herstellung von Formkörpern, **dadurch gekennzeichnet, dass** man ein nach den Ansprüchen 1 bis 14 erhältliches Halbzeug auf eine Temperatur erhitzt, die oberhalb der Temperatur liegt, bei der die Bindemittel vernetzen.

17. Verfahren nach Anspruch 16, **dadurch gekennzeichnet, dass** man das Halbzeug zur Formgebung und Härtung der Bindemittel in einer Presse auf eine Temperatur in dem Bereich von 100 bis 260°C, vorzugsweise 180 bis 220°C, erhitzt.

18. Formteile, erhältlich nach dem Verfahren der Ansprüche 16 bis 17.

19. Verwendung der Formteile nach Anspruch 18 als Innenteile von Kraftfahrzeugen, als Verpackungsmaterial, als Einweggeschirr, als Zubehör für Bürobedarf, als Dekorteile in der Möbelindustrie sowie als Einsätze für Schränke, Schubladen und Rückwände von Möbeln.
